# EUROPÄISCHE PATENTSCHRIFT

(11) **EP 0 834 531 B1**
(45) Veröffentlichungstag und Bekanntmachung des Hinweises auf die Patenterteilung: **30.08.2000**
(21) Anmeldenummer: 97116597.2
(22) Anmeldetag: 24.09.1997
(51) Int. Cl.: C08K 5/00, C08J 3/22, C08L 23/28

(54) **Polymercompounds und ihre Verwendung für die Vulkanisation halogenierter Butylkautschuke mit geringem Halogengehalt**
Polymer compositions and their use for the vulcanisation of halogenated butylrubbers having low halogen contents
Compositions polymères et leur utilisation pour la vulcanisation de caoutchoucs butyle halogénés à faible teneur en halogène

(30) Priorität: 07.10.1996 DE 19641154
(43) Veröffentlichungstag der Anmeldung: 08.04.1998
(73) Patentinhaber: BAYER AG, 51368 Leverkusen (DE)
(72) Erfinder: Schubart, Rüdiger, Dr., 51467 Bergisch Gladbach (DE); Musch, Rüdiger, Dr., 51467 Bergisch Gladbach (DE); Sumner, Anthony, 51061 Köln (DE); Kelbch, Stefan, Dr., 53804 Much (DE)

(56) Entgegenhaltungen:
- EP-A- 0 763 561
- EP-A- 0 806 449
- DATABASE WPI Section Ch, Week 9613 Derwent Publications Ltd., London, GB; Class A17, AN 96-124190 XP002051951 & JP 08 020 693 A (EXXON CHEM PATENTS INC) , 23.Januar 1996

## Beschreibung

Die Erfindung betrifft die Herstellung von Mischungen aus Polymercompounds, die Amidinen, Mercaptoverbindungen und Polymere enthalten und neuen halogenhaltigen Butylkautschuken, sowie deren Verwendung zur Herstellung von Kautschukvulkanisaten.

Die Verwendung von halogenierten Butylkautschuken insbesondere im Reifenbau ist bekannt, da halogenierte Butylkautschuke sich besonders vorteilhaft erweisen im Hinblick auf das Adhäsionsverhalten, auf die Biegebeständigkeit, auf die Lebensdauer und im Hinblick auf die Luft- und Wasserundurchlässigkeit. Bedingt durch die Ausgewogenheit der erwähnten physikalischen Eigenschaften werden halogenierte Butylkautschuke bevorzugt im Reifenbau eingesetzt und dort insbesondere bei der Herstellung von Reifen-Innenlinern. Durch die Verwendung von Reifen-Innenlinern, die auf halogenierten Butylkautschuken basieren, werden die Reifen-Karkasse und die darin verwendeten Stahl- oder Textilcorde vor dem Angriff von Feuchtigkeit und Luftsauerstoff geschützt. Dies wirkt sich positiv auf die Lebensdauer von Luftreifen, insbesondere von stark beanspruchten LKW-Reifen aus.

Es hat nicht an Versuchen gefehlt, die physikalischen Eigenschaften der halogenierten Butylkautschuke zu verbessern, durch z.B. Erhöhung des Halogengehalts im Butylkautschuk (Verbesserung der Adhäsionseigenschaft). Wir verweisen in diesem Zusammenhang auf die US-Patentschrift 2,698,041, auf die britische Patentanmeldung GB 2 072 576 und auf die europäische Patentanmeldung EP 0 385 760, wo halogenierte Butylkautschuke sowie deren Einsatz und Verwendung im Reifenbau beschrieben werden.

Aufgrund der Nachteile bei Verwendung von reinen halogenierten Butylkautschuken als Kautschukmaterial für Innenliner (siehe EP 0 385 760) wurde in jüngster Zeit vorgeschlagen, Mischungen aus halogenierten Butylkautschuken und reinem Butylkautschuk zu verwenden. Dadurch soll die Rißbildung bei den Innenlinern aufgrund thermischer Härtungsprozesse vermieden werden, was sich letztendlich für die Lebensdauer des Luftreifens positiv auswirkt.

Nachteilig bei den in dem vorliegenden Stand der Technik beschriebenen halogenierten Butylkautschuken bzw. Mischungen von halogenierten Butylkautschuken mit reinem Butylkautschuk ist z.B. das nicht befriedigende Alterungsverhalten, die Bildung von korrosiv wirkendem Halogenwasserstoff während des Vernctzungsprozesses und die geringe Vernetzungsgeschwindigkeiten bei den beschriebenden Blends, was zu Lasten der Produktivität bei der Reifenherstellung geht.

In EP-A 763 561 werden Polymercompounds beansprucht, bestehend aus
a) cyclischen und/oder acyclischen Aminen,
b) Mercaptoverbindungen des Benzothiazols, Benzoimidazols, Benzopyrimidins und/oder des Benzotriazins und
c) EPM, EPDM, EVM, BR, SBR, NR, NBR und/oder IIR sowie deren Verwendung bei der Vulkanisation halogenhaltiger Kautschuke.

Der in Tabelle 1 erwähnte Chlorbutylkautschuk 1240® und Brombutylkautschuk 2030®, beide Handelsprodukte der Bayer AG, besitzen einen Bromgehalt von 1,94, einen Gehalt an nicht-halogenierten Doppelbindungen von 0,65 und einen Gehalt an Antiagglomerat-/Vulkanisationskontrollmittel (Fettsäuresalzgehalt) von 2,45 % bzw. einen Chlorgehalt von 1,2 %, einen Gehalt an nicht-halogenierten Doppelbindungen von 0,65 % sowie einen Gehalt an Antiagglomerat-/Vulkanisationskontrollmittel von 1,5 %.

Aufgabe der vorliegenden Erfindung ist es daher, halogenierte Butylkautschuke zur Verfügung zu stellen, die durch Zusatz bestimmter Polymercompounds insgesamt eine Verbesserung der zuvor erwähnten Eigenschaften gewährleisten, ohne daß der Einsatz von Blends aus halogenierten Butylkautschuken und nicht halogenierten Butylkautschuken erforderlich ist.

Die Aufgabe wurde dadurch gelöst, daß die Kautschukmischungen neue halogenierte Butylkautschuke mit einem definierten, geringen Gehalt an Halogen, einem definierten Gehalt an nicht halogenierten Doppelbindungen und einem definierten Gehalt an Antiagglomerat-/Vulkanisationskontrollmitteln und polymergebundene Blends aus Amidinen und bestimmten Mercaptoverbindungen enthalten.

Gegenstand der Erfindung sind demnach Mischungen aus halogenierten Butylkautschuken (A) mit einem Halogengehalt von 0,5 bis 2,5 % sowie einem Gehalt an nicht halogenierten Doppelbindungen von mehr als 0,7 Mol-% und einem Gehalt an Antiagglomerat-/Vulkanisationskontrollmitteln von 1,0 bis 2,2 Gew.-%, bezogen auf die Gesamtmenge an halogeniertem Butylkautschuk, sowie aus Polymercompounds (B) bestehend aus
a) cyclischen und/oder acyclischen Amidinen,
b) Mercaptoverbindungen oder Zinksalze der Mercaptoverbindungen des Benzothiazols, Benzoimidazols, Benzopyrimidins und/oder des Benzotriazins und
c) Ethylen/Propylen-Kautschuken (EP(D)M), Ethylenvinylacetat-Kautschuken (EVM), Butadienkautschuken (BR), Styrol-Butadien-Kautschuken (SBR), Naturkautschuken (NR), Butadien Acrylnitril-Kautschuk (NBR) und/oder Butylkautschuken (IIR),
wobei im Compound B die Komponenten a) und b) im Molverhältnis von 0,25:1 bis 2:1 (a:b) vorliegen, der Anteil des Polymerbinders c) 90 bis 10 Gew.%, bezogen auf das Gesamtgewicht der Komponenten a) bis c), beträgt und wobei die Komponente (B) (Polymercompound) in einer Menge von 0,1 bis 20 Gew.-Teilen, bevorzugt 0,5 bis 10 Gew.-Teilen, bezogen auf 100 Gew.-Teile der Komponente (A), eingesetzt wird.

Als halogenierte Butylkautschuke werden erfindungsgemäß solche Butylkautschuke verstanden, die durch Chlor und/oder Brom, bevorzugt durch Brom halogeniert sind.

Bevorzugt sind erfindungsgemäß die Brombutylkautschuke mit einem Gehalt an nicht bromierten Doppelbindungen von 0,7 bis 1,0 Mol-%, insbesondere 0,75 bis 0,95 Mol-%, und einem Gehalt an Antiagglomerat-/Vulkanisationskontrollmitteln von 1,25 bis 2,0 Gew.-%, insbesondere 1,45 bis 2,0 Gew-%.

Der Halogengehalt der erfindungsgemäßen Butylkautschuke beträgt bevorzugt 0,8 bis 1,9 %. Im Falle von Brombutylkautschuk beträgt der Bromgehalt bevorzugt 1,4 bis 1,8 %.

Erfindungsgemäß werden unter "Butylkautschuke" Copolymerisate auf Basis von Isoolefinen und Olefinen verstanden, wie sie beispielsweise im vorstehend genannten US-Patent 2,698,041 und in den anderen erwähnten Patentveröffentlichungen beschrieben sind. Die erwähnten Butylkautschuke sind insbesondere gekennzeichnet, durch einen Gehalt von etwa 70 bis 99,5 Gew.-% an Isoolefinen mit 4 bis 8 Kohlenstoffatomen, wie Isobutylen, 3-Methylbuten-1,4, Methylpenten-1,2, Ethylbuten-1 und/oder 4-Ethylpenten-1, insbesondere Isobuten, und einen Gehalt von etwa 0,5 bis 30 Gew.-% an Dienen mit 4 bis 18 Kohlenstoffatomen, wie Isopren, Butadien-1,3, 2,4-Dimethylbutadien-1,3, Piperilin, 3-Methylpentadien-1,3, Hexadien-2,4, 2-Neopentyl-butadien-1-3, 2-Methylhexadien-1,5, 2-Methylpentadien-1,4, 2-Methylheptadien-1,6, Cyclopentadien, Cyclohexadien, 1-Vinylcyclohexadien und Mischungen davon. Bevorzugt ist die Verwendung von Isopren. Darüber hinaus können noch andere Monomere in den üblichen Mengen verwendet werden, wie Styrol, Chlorstyrol und/oder a-Methylstyrol.

Ganz besonders bevorzugt sind Butylkautschuke mit einem Gehalt an Isoolefinen von 95 bis 99,5 Gew.-% und einem Gehalt an Dienen von 0,5 bis 5,0 Gew.-%. Dabei ist der Einsatz von Butylkautschuken auf Basis von Isobuten und Isopren besonders bevorzugt.

Die erfindungsgemäßen halogenierten Butylkautschuke sind gekennzeichnet durch einen definierten Gehalt an nicht halogenierten Doppelbindungen, einen definierten Gehalt an Antiagglomerat-/Vulkanisationskontrollmitteln und einen definierten Gehalt an Halogenen. Es ist daher von Bedeutung, daß bei der Herstellung des Butylkautschuks, ausgehend von den zuvor erwähnten Monomeren so gearbeitet wird, daß sich die erwähnten Gehalte einstellen. Butylkautschuk kann in üblicher Weise hergestellt werden durch Polymerisation in Lösung, in der Gasphase oder nach dem Slurry-Verfahren. Bevorzugt wird die Polymerisation in Suspension (Slurry-Verfahren) durchgeführt (siehe z.B. Bayer Handbuch für die Gummiindustrie Sektion A 9.1, Seite 208 (1991)).

Als Antiagglomerat-/Vulkanisationskontrollmittel kommen insbesondere in Frage: Fettsäure-Salze, beruhend auf Fettsäuren mit 8 bis 22 Kohlenstoffatomen, bevorzugt 12 bis 18 Kohlenstoffatomen, wie Kalzium-, Magnesium-, Kalium- und/oder Ammoniumstearate und -Palmitate sowie -Oleate. Außerdem kommen als Antiagglomerat-/Vulkanisationskontrollmittel in Frage Silikate, wie Kalziumsilikat. Die Antiagglomerat-/Vulkanisationskontrollmittel können einzeln oder im Gemisch untereinander eingesetzt werden. Das günstigste Mischungsverhältnis kann leicht durch entsprechende Vorversuche ermittelt werden. Bevorzugt wird Kalziumstearat und/oder Kalziumpalmitat eingesetzt.

Bei der Herstellung der Butylkautschuke, die als Ausgangsprodukte für die erfindungsgemäßen halogenierten Butylkautschuke, eingesetzt werden, ist darauf zu achten, daß die Antiagglomerat-/Vulkanisationskontrollmittel in den Mengen eingesetzt werden, die den oben angegebenen Mengenbereichen entsprechen.

Die erfindungsgemäßen halogenierten Butylkautschuke können hergestellt werden, indem man entweder feinverteilten Butylkautschuk mit Halogenierungsmitteln, wie Chlor oder Brom, bevorzugt Brom, behandelt, oder indem man zur Herstellung von Brombutylkautschuken Bromierungsagenzien, wie N-Bromsuccinimid, mit dem zugrundeliegenden Butylkautschuk in einer Mischungsapparatur intensiv vermischt oder indem man eine Lösung oder eine Dispersion des zugrundeliegenden Butylkautschuks in geeigneten organischen Lösungsmitteln mit entsprechenden Bromierungsagenzien behandelt (s. z.B.Bayer Handbuch für die Gummiindustrie Sektion A 9.1, Seite 208 (1991)).

Die Halogenierung der zugrundeliegenden Butylkautschuke wird dabei so gesteuert, daß ein Restgehalt an nicht halogenierten bzw. bromierten Doppelbindungen in den zuvor definierten Bereichen verbleibt. Der Gehalt an Halogenen, bevorzugt Brom, liegt dabei in den zuvor angegebenen Bereichen.

Bei den erfindungsgemäßen Polymercompounds B liegen die Komponenten a) und b) im Molverhältnis von bevorzugt 0,5:1 bis 1,5:1 vor und der Anteil des Polymerbinders c) liegt bei bevorzugt 30 bis 60 Gew.%, bezogen auf das Gesamtgewicht der Komponenten a) bis c).

Als cyclische oder acyclische Amidine können für die erfindungsgemäßen Polymercompounds Amidine gemäß DE-A 3 942 463 verwendet werden, wobei Verbindungen der dort beschriebenen allgemeinen Formeln III und IV bevorzugt sind. Ganz besonders bevorzugt ist die Verwendung von 1,8 Diazabicyclo - (5.4.0)-undecen (7) (DBU) oder 1,5-Diazabicyclo-(4.3.0)nonen-(5) (DBN). Natürlich können die Amidine auch als Adsorbate auf organischen oder anorganischen Trägern, z.B. Kaolin, Kreide oder Aktivkohle, in fester Form zudosiert werden.

Als Mercaptoverbindungen kommen Mercaptoverbindungen und Zinksalze von Mercaptoverbindungen des Benzothiazols, Benzoimidazols, Benzopyrimidins und Benzotriazins in Frage. Bevorzugt werden die Mercaptoverbindungen und Zinkmercaptoverbindungen des Benzothiazols, des Benzoimidazols und des 4,5-Methylbenzoimidazols eingesetzt, wobei Mercaptobenzoimidazol, Zink-mercaptobenzoimidazol sowie 4-Methyl-oder 5-Methyl-Mercaptobenzoimidazol und 4-Methyl- oder 5-Methyl-Zink-mercaptobenzoimidazol besonders bevorzugt sind.

Als Polymerkomponenten c) kommen besonders EP(D)M und EVM in Frage.

Die Komponenten a) bis c) können jeweils sowohl einzeln als auch in beliebigen Mischungen untereinander eingesetzt werden. Falls Mischungen von Amidinen a), Mercaptoverbindungen b) oder Polymeren c) untereinander eingesetzt werden, kann das jeweils günstigste Mischungsverhältnis leicht durch entsprechende Vorversuche ermittelt werden. Dieses richtet sich dann auch nach dem erwünschten Eigenschaftsbild der herzustellenden Vulkanisate.

Die Herstellung der erfindungsgemäßen Polymercompounds kann in üblicher Weise durch Mischen der Komponenten a) bis c) in üblichen Mischaggregaten, wie Innenmischer, Extruder oder Walze, erfolgen, wobei den Komponenten a) bis c) noch andere Kautschukhilfsmittel oder Trägermaterialien, wie Ruß, Kreide, Kaolin, Kieselsäure, Weichmacher, Farbstoffe, Biocide und/oder Vulkanisationsbeschleuniger zugemischt werden können. Nach Abmischen der Komponenten a) bis c) in den üblichen Mischaggregaten werden die Polymercompounds anschließend in entsprechende übliche Gebrauchsformen, wie Granulat, überführt.

Die halogenierten Butylkautschukvulkanisate finden vor allem Verwendung bei der Herstellung von Reifen, insbesondere für die Herstellung von Reifen-Innenlinern und Reifenseitenwänden sowie auch für Reifen-Laufflächen. Weiterhin finden die halogenierten Butylkautschukvulkanisate Verwendung bei pharmazeutischen Anwendungen, wie Schläuche und Stopfen. Es ist außerdem möglich die halogenierten Butylkautschukvulkanisate in üblichen Mengen abzumischen mit allen bekannten Synthesekautschuken und Naturkautschuken und mit den gebräuchlichen Füllstoffen, wie Ruße oder Kieselsäuren.

Die erfindungsgemäß hergestellten Mischungen aus halogenierten Butylkautschuken (A) und Polymerkompounds (B) besitzen folgende Vorteile gegenüber den bislang bekannten Mischungen auf Basis von halogenierten Butylkautschuken oder deren Abmischung mit reinen Butylkautschuken: Gleichbleibende Adhäsion des Reifen-Innenliners an der Karkasse, Erzielung einer höheren Vernetzungsgeschwindigkeit, schnelleres Erreichen des Optimums beim Vernetzungsgrad ohne unerwünschte langsame Nachvernetzung, geringeres Rißwachstum beim Gebrauch der Innenliner und insbesondere eine deutliche verbesserte Alterungsbeständigkeit und damit gekoppelt eine längere Lebensdauer des Innenliners und der Reifen.

Erfindungsgemäß werden die Polymercompounds mit den halogenhaltigen Butylkautschuken vor der Vulkanisation auf üblichen Mischaggregaten gemischt. Bevorzugte Mischaggregate sind die in der Kautschukindustrie üblichen Kneter, Walzen und Mischextruder, die in der Regel mit Scherraten von 1 bis 1.000 sec⁻¹, vorzugsweise 1 bis 200 sec⁻¹, arbeiten.

Die Vulkanisation kann bei Temperaturen von 20 bis 250°C, vorzugsweise 140 bis 210°C, gegebenenfalls unter einem Druck von 10 bis 200 bar, erfolgen.

### Beispiele

### Beispiel für die Herstellung des erfindungsgemäßen Polymercompounds (B)

**Tabelle 1**

| **Einsatzstoffe** | **Verwendetes Material**^{**1)**} |
|---|---|
| 1,8 Diaza-bicyclo (5.4.0)-undecen (7) | DBU |
| 4/5-Methylmercaptobenzoimidazol(Gemisch) | Vulkanox MB 2 |
| EPDM-Polymer | AP 147 |
| EVM-Polymer | Levapren 452 K |

| | |
|---|---|
| 1) Verkaufs- und Handelsprodukte von Bayer und deren Tochterfirmen | |

### Herstellung des Polymercompounds

In einer Zweiwellenschnecke vom Typ ZSK 32 mit Düsenaustrag wurden die 4 Komponenten kontinuierlich, bei Temperaturen bis 100°C zugegeben, bei 60 Upm gemischt und über die Düse als Strang ausgetragen. Der Produktstrang wurde mit Stickstoff gekühlt, granuliert und schwach talkumiert.

Die 4 Komponenten wurden in folgenden Verhältnissen eindosiert :

| Polymer | Menge g | Mercaptoverbindung | Menge in g / mol | Amidin | Menge in g/ mol |
|---|---|---|---|---|---|
| AP 147 | 50 | Vulkanox MB2 | 75 / 0,45 | DBU | 50 / 0,32 |
| Levapren 452K | 50 | | | | |

### Beispiele für die Herstellung des Halobutylkautschuks (A) - Brombutylkautschuk -

Für die Herstellung der erfindungsgemäßen halogenierten Butylkautschuke wurde ein handelsüblicher Butylkautschuk der Firma Bayer-Rubber N.V., Antwerpen, Belgien, mit dem Handelsnamen Polysar Butyl® 301 eingesetzt. Dieser Butylkautschuk hatte folgende Zusammensetzung und physikalischen Parameter:
Isoprengehalt: 1,55 bis 1,95 Mol-%,
Isobutylengehalt: 97,5 bis 98,0,
Mooney-Viskosität M_{L} 1+8 bei 125°C: 51±5.

Dieser Ausgangsbutylkautschuk wurde in folgender Weise bromiert:

Zunächst wurde eine 15- bis 20 gew.-%ige Lösung des oben erwähnten Butylkautschuks in Hexan hergestellt. Zu der Butylkautschuk-Polymerlösung wurden 36 kg Brom pro 1000 kg eingesetzten Butylkautschuk unter sorgfältig kontrollierten Bedingungen dosiert. Die Bromierung wurde bei 50°C unter intensivem Mischen der hexanischen Polymerlösung durchgeführt. Nach Ende der Reaktion wurde mit 50 gew.-%iger Natriumhydroxidlösung neutralisiert und diesem Gemisch 21 kg pro 1000 kg eingesetzten Butylkautschuk Kalziumstearat zugesetzt sowie 13,5 kg pro 1000 kg epoxidiertes Sojabohnenöl als Stabilisator. Anschließend wurde das Lösungsmittel in üblicher Weise verdampft. Zurück blieb eine Kautschuksuspension aus der der Festkautschuk in üblicher Weise gewonnen wurde. Der erhaltene Brombutylkautschuk besaß einen Bromgehalt von 1,37 %, einen Gehalt an nicht halogenierten Doppelbindungen von 0,93 Mol-%, und einen Fettsäuresalzgehalt von 1,45 Gew.-%, bezogen auf die gesamte Menge an eingesetztem Butylkautschuk (Brombutylkautschuk : BIIR 1).

Auf die gleiche Weise - wie oben beschrieben - wurde die Vergleichsproben 2 und 3 hergestellt (Brombutyl-kautschuk BIIR bzw. 3). BIIR 3 ist ein Vergleichsmuster und hat die Eigenschaften des Standard Polysar Brombutyl 2030® mit einem Halogengehalt und einem Gehalt an Fettsäuresalz der höher liegt als jener des erfindungsgemäßen Kautschuks. Unter Verwendung der Brombutylkautschuke aus Tabelle 2 wurden die Mischungen formuliert (Tabelle 3,4). Die Mischungsbestandteile aus Tabelle 3 und 4 waren Ruß (Corax N660, erhältlich bei Degussa), Mineralöl (Sunpar 2280, erhältlich bei Sun Oil), Harz (Pentalyn A, erhältlich bei Herkules), Stearinsäure (erhältlich bei Henkel), MBTS (Vulkacit DM/MG, erhältlich bei Bayer).

Diese Mischungskomponenten wurden in einem Werner & Pfleiderer GK 1,5 E Innenmischer gemischt. Zinkoxid und Schwefel wurden danach auf einer Walze zugegeben. Nach der Fertigmischung auf der Walze wurden Probekörper hergestellt. Das Vulkanisationsverhalten (Scorchzeit, t₉₀, maximales Drehmoment) wurde mit einem MDR 2000 (Fa. Flexsys) Rheometer gemessen. Als Vulkanisateigenschaften wurden u.a. die mechanischen Eigenschaften und die dynamische Rißbeständigkeit bestimmt.

Die dynamische Rißbeständigkeit wurde mit dem Bayer Tear Analyser gemessen, der durch U. Eisele, S.A. Kelbch und H.W. Engels in Kautsch., Gummi, Kunstst. 45, 1064 (1992) beschrieben wurde. Mit dieser Maschine ist eine Simulation der Last- und Umgebungsbedingungen von Reifengummikomponenten beim Betrieb des Reifens möglich. Für eine Reihe unterschiedlicher Reifenkomponenten, eingeschlossen Innerlinercompounds, konnten gute Korrelationen zwischen den Ergebnissen dieses speziellen Labortests und den Resultaten von Reifenversuchen erreicht werden (siehe A.J.M. Sumner, S.A. Kelbch und U.G. Eisele, Proceedings of the 146th ACS Rubber Division Meeting, October 1994, Pittsburgh Paper 18). Als Probekörper dienen Gummistreifen (60x15x1,5 mm) mit einem seitlichen Einschnitt (ca. 1 mm tief). Ein Test wird unter kontrollierten Umgebungsbedingungen durchgeführt, die jenen im Reifen entsprechen.

Ein servohydraulischer Antrieb bewegt einen Hubkolben mit den unteren Probenhalterungen. Im Rahmen der Leistungsfähigkeit der Servohydraulik sind den Proben beliebige, zeitabhängige Lastspiele aufprägbar. Für Reifencompounds ist eine pulsförmige Belastungsart angebracht. Jede von hinten beleuchtete (schwarze) Probe (maximal 10 simultan) ist mit einer Kraftmeßdose verbunden, die ihrerseits wieder an einer Schrittmotorführung befestigt ist. Durch die Kraftmeßzelle wird zum einen die zeitabhängige Spannung im Material gemessen, zum anderen die Minimalkraft (Vorspannung) über die Schrittmotoren geregelt. Neben Minimal- und Maximalspannungen und der Dehnung werden auch die gespeicherten Energiedichten und die bleibende Dehnung der Proben gemessen. Das Rissbild wird mit einer CCD-Videoshutterkamera erfaßt, die auf einem schrittmotorgetriebenen x/y-Schlitten befestigt ist. Es wird dann in eine Bilderfassungskarte transferiert, digitalisiert und per Software nach Lokalisierung der Rißlippen und des Rißgrunds durch Ausmessung der Schwarz/Linie des Risses die Rißkontourlänge ermittelt. Aus der Abhängigkeit der Rißkontourlänge von der Zahl der Lastspiele wird die Rißpropagationsrate dlnc/dn=1/c(dc/dn) ermittelt und zwar für den Bereich der Meßdaten bevor katastrophales Rißwachstum einsetzt.

Wie durch Korrelation mit Reifenversuchen gezeigt werden konnte (s. A.J.M. Sumner, S.A. Kelbch, U.G. Eisele, Rubber World 213, No. 2, 38 (1995)), stehen Innerlinercompounds beim Betrieb des Reifens unter konstanter Dehnbelastung, so daß ein Vergleich der Rißpropagationsraten bei konstanter Dehnung zu erfolgen hat.

Die Rißbeständigkeit der untersuchten Mischungen wurde für ungealterte sowie für gealterte (168h bei 120°C, Umluftschrank) Proben gemessen.

Die Ergebnisse aus Tabelle 3 zeigen folgendes:
Der Zusatz des Polymercompounds im Beispiel 2,4,6 und 8 bewirkt in allen Fällen im Vergleich zu den Polymercompound-freien Mischungen 1,3,5,7 eine schnellere Ausvulkanisation und eine höhere Netzwerkdichte. Durch entsprechende Compoundierung läßt sich das Vulkanisationsverhalten angleichen wie der Vergleich von Ansatz-Nr. 1 und 8 beispielhaft zeigt.

In Tab 4 wird gezeigt, wie sich durch die Kombination aus neuem Brombutyl-kautschuk und Polymercompound Vulkanisate herstellen lassen, deren Alterungsbeständigkeit bei Heißluftlagerung deutlich besser ist (Beispiel 12) als entsprechende Formulierungen die keinen Polymercompound enthalten oder auf Basis von Standardpolymer aufgebaut sind (Beispiele 9-11). Gerade der unerwünschte Modulanstieg nach Alterung wirkt sich negativ auf die Rißbeständigkeit von Innerleinermischungen aus (Beispiel 9-11).

Die Brombutylkautschuke 1 und 2 werden insbesondere empfohlen zur Verwendung in Innerliner-Mischungen langlebiger LKW-Reifen mit einer ausgewogenen Balance der kritischen Eigenschaften.

**Tabelle 2**

| Eingesetzte Brombutylkautschuke | | | | | | |
|---|---|---|---|---|---|---|
| BIIR | Brom-Gehalt % | Anteil nicht halog. Doppelbindungen % | Fettsäuresalze Gehalt % | Kalziumsalze Gehalt % | Natriumsalze Gehalt % | Stabilisatoren % |
| 1 | 1,4 | 0,93 | 1,42 | <0,02 | <0,02 | 1,10 |
| 2 | 1,76 | 0,77 | 2,1 | <0,02 | <0,02 | 1,35 |
| 3 x) | 1,94 | 0,65 | 2,45 | <0,02 | <0,02 | 1,50 |

| | | | | | | |
|---|---|---|---|---|---|---|
| x) Vergleichsversuch, Polysar Bromobutyl 2030 (Fa. Bayer) | | | | | | |

**Tabelle 3**

| Lagerstabilität von Mischungen und Vulkanisation | | | | | | | | | |
|---|---|---|---|---|---|---|---|---|---|
| Nr. | | 1*) | 2*) | 3*) | 4 | 5*) | 6 | 7*) | 8 |
| **Rezeptur** | | | | | | | | | |
| BIIR 3 | | 100 | 100 | - | - | - | - | - | - |
| BIIR 1 | | - | - | 100 | 100 | 100 | 100 | 100 | 100 |
| Ruß N 660 | | 60 | 60 | 60 | 60 | 60 | 60 | 60 | 60 |
| Polymercompound | | - | 2,25 | - | 2,25 | - | 2,25 | - | 2,25 |
| Sunpar 2280 | | 7 | 7 | 7 | 7 | 7 | 7 | 7 | 7 |
| Pentalyn A | | 4 | 4 | 4 | 4 | 4 | 4 | 4 | 4 |
| Stearinsäure | | 1 | 1 | 1 | 1 | 1 | 1 | 1 | 1 |
| Vulkacit DM | | 1,3 | 1,3 | 1,3 | 1,3 | 1,3 | 1,3 | 1,3 | 1,3 |
| ZnO | | 3 | 3 | 3 | 3 | 1,5 | 1,5 | 3 | 3 |
| Schwefel MC | | 0,5 | 0,5 | 0,5 | 0,5 | 0,5 | 0,5 | 0,25 | 0,25 |

| Mischungseigenschaften : Monsanto MDR 2000 (165 °C, 30 min) | | | | | | | | | |
|---|---|---|---|---|---|---|---|---|---|
| ts01 | min | 1,84 | 1,26 | 2,15 | 1,52 | 2,2 | 1,54 | 2,43 | 1.71 |
| t90 | min | 5,9 | 6,03 | 8,45 | 7,19 | 7,85 | 7,28 | 5,59 | 7,55 |
| t95 | min | 8,86 | 7,07 | 14,45 | 8,79 | 13,0 | 8,84 | 6,86 | 8,99 |
| F Max | Nm | 6,63 | 9,1 | 5,7 | 8,1 | 5,65 | 8,2 | 4,6 | 7,58 |

| | | | | | | | | | |
|---|---|---|---|---|---|---|---|---|---|
| ^{*)} Vergleichsbeispiel | | | | | | | | | |

**Tabelle 4**

| Vulkanisateigenschaften | | | | | |
|---|---|---|---|---|---|
| Nr. | | 9 *) | 10 *) | 11 *) | 12 |
| **Rezeptur** | | | | | |
| BIIR 3 | | 100 | 100 | - | - |
| BIIR 2 | | - | - | 100 | 100 |
| Ruß N 660 | | 60 | 60 | 60 | 60 |
| Polymercompound | | - | 2,25 | - | 2,25 |
| Sunpar 2280 | | 7 | 7 | 7 | 7 |
| Pentalyn A | | 4 | 4 | 4 | 4 |
| Stearinsäure | | 1 | 1 | 1 | 1 |
| Vulkacit DM | | 1,3 | 1,3 | 1,3 | 1,3 |
| ZnO | | 3 | 3 | 3 | 3 |
| Schwefel MC | | 0,5 | 0,5 | 0,5 | 0,5 |

| Mischungseigenschaften : Monsanto MDR 2000 (165 °C, 30 min) | | | | | |
|---|---|---|---|---|---|
| Festigkeit | MPa | 10.4 | 12.9 | 10.7 | 11.2 |
| Bruchdehnung | % | 720 | 575 | 745 | 605 |
| 50% Modul | MPa | 0.82 | 0.84 | 0.82 | 0.83 |
| 100% Modul | MPa | 1.24 | 1.55 | 1.28 | 1.39 |
| Härte 23°C | Shore A | 55 | 56 | 52 | 54 |

| Werte nach Alterung 7 Tage 120 °C | | | | | |
|---|---|---|---|---|---|
| Festigkeit | MPa | 9.2 | 10.9 | 9.2 | 10.1 |
| Bruchdehnung | % | 500 | 495 | 664 | 560 |
| 50% Modul | MPa | 1.37 | 1.15 | 1.14 | 1.02 |
| Härte 23 °C | Shore A | 62 | 60 | 59 | 57 |

| | | | | | |
|---|---|---|---|---|---|
| ^{*)} Vergleichsbeispiel | | | | | |

**Tabelle 5**

| Dynamische Rißbeständigkeit (Tear Analyzer) Rißwachstumrate, 1/c(dc/dn), Mc⁻¹ bei 20% Dehnung, T=70°C | | | | | |
|---|---|---|---|---|---|
| Nr | | 9 *) | 10 *) | 11 *) | 12 |
| ungealtert | % | 19 | 38 | 16 | 12 |
| gealtert, 168 Std bei 120 °C | % | 500 | 150 | 200 | 70 |

| | | | | | |
|---|---|---|---|---|---|
| ^{*)} Vergleichsbeispiel | | | | | |

## Patentansprüche

1. Mischungen aus halogenierte Butylkautschuken und Polymercompounds, dadurch gekennzeichnet, daß die halogenierten Butylkautschuke einen Halogengehalt von 0,5 bis 2,5 % sowie einen Restgehalt an nicht halogenierten Doppelbindungen von mehr als 0,7 Mol-% besitzen und der Gehalt an Antiagglomerat-/Vulkanisationskontrollmitteln 1,0 bis 2,2 Gew.-% beträgt, bezogen auf die Gesamtmenge an halogeniertem Butylkautschuk, und die Polymercompounds bestehend aus
a) cyclischen und/oder acyclischen Amidinen,
b) Mercaptoverbindungen und Zinksalzen von Mercaptoverbindungen des Benzothiazols, Benzoimidazols, Benzopyrimidins und/oder des Benzotriazins und
c) Ethylen-Propylen-Kautschuken (EPM), Ethylen-Propylen-Dien-Kautschuken (EPDM), Ethylenvinylacetat-Kautschuken (EVM), Butadienkautschuken (BR), Styrol-Butadien-Kautschuken (SBR), Naturkautschuken (NR), Butadien Acrylnitril-Kautschuke (NBR) und/oder Butylkautschuken (IIR),
wobei die Komponenten a) und b) im Molverhältnis von 0,25:1 bis 2:1 (a:b) vorliegen und der Anteil des Polymerbinders c) 90 bis 10 Gew.%, bezogen auf das Gesamtgewicht der Komponenten a) bis c), beträgt und wobei die Komponente (B) (Polymercompound) in einer Menge von 0,1 bis 20 Gew.-Teilen, bevorzugt 0,5 bis 10 Gew.-Teilen, bezogen auf 100 Gew.-Teile der Komponente (A), eingesetzt wird.

2. Verwendung der Mischungen aus halogenierten Butylkautschuken und Polymercompounds nach Anspruch 1 zur Herstellung von Kautschukvulkanisaten.

3. Verwendung der Mischungen aus halogenierten Butylkautschuken und Polymercompounds nach Anspruch 1 zur Herstellung von Reifen, insbesondere Reifen-Innenlinern, Reifenseitenwänden oder Reifenlaufflächen.

## Claims

1. Compositions comprising halogenated butyl rubbers and polymer compounds, characterised in that the halogenated butyl rubbers have a halogen content of 0.5 to 2.5 % and have a residual content of non-halogenated double bonds of more than 0.7 mole %, and the content of anti-agglomeration/vulcanisation control agents is 1.0 to 2.2 wt.%, with respect to the total amount of halogenated butyl rubber, and the polymer compounds consist of
a) cyclic and/or acyclic amidines,
b) mercapto compounds or zinc salts of mercapto compounds of benzothiazole, benzoimidazole, benzopyrimidine and/or benzotriazine, and
c) ethylene/propylene rubbers (EPM), ethylenepropylene-diene rubbers (EPDM), ethylene/vinyl acetate rubbers (EVM), butadiene rubbers (BR), styrene-butadiene rubbers (SBR), natural rubbers (NR), butadiene acrylonitrile rubbers (NBR) and/or butyl rubbers (IIR),
wherein components a) and b) are present in a molar ratio of 0.25:1 to 2.1 (a:b) and the content of polymer binder c) is 90 to 10 wt.%, with respect to the total weight of components a) to c), and wherein component (B) (polymer compound) is used in an amount of 0.1 to 20 parts by weight, preferably 0.5 to 10 parts by weight, with respect to 100 parts by weight of component (A).

2. The use of the compositions comprising halogenated butyl rubbers and polymer compounds according to claim 1 for the production of vulcanised rubber materials.

3. The use of the compositions comprising halogenated butyl rubbers and polymer compounds according to claim 1 for the production of tyres, particularly tyre inner liners, tyre sidewalls or tyre treads.

## Revendications

1. Mélanges consistant en caoutchoucs Butyl halogénés et compositions polymères, caractérisés en ce que les caoutchoucs Butyl halogénés ont une teneur en halogène de 0,5 à 2,5 % et une teneur résiduelle en doubles liaisons non halogénées supérieure à 0,7 mol %, la teneur en agents anti-agglomérats/contrôleurs de vulcanisation représentant 1,0 à 2,2 % du poids total du caoutchouc Butyl halogéné, et en ce que la composition polymère consiste en
a) des amidines cycliques et/ou acycliques,
b) des dérivés en mercapto et des sels de zinc de dérivés en mercapto du benzothiazole, du benzimidazole, de la benzopyrimidine et/ou de la benzotriazine et
c) des caoutchoucs éthylène-propylène (EPM), des caoutchoucs éthylène-propylène-diène (EPDM), des caoutchoucs éthylène-acétate de vinyle (EVM), des caoutchoucs de butadiène (BR), des caoutchoucs de styrène-butadiène (SBR), des caoutchoucs naturels (NR), des caoutchoucs butadiène-acrylonitrile (NBR) et/ou des caoutchoucs Butyl (IIR),
les composants a) et b) étant présents dans un rapport molaire a/b de 0,25:1 à 2:1, la proportion du liant polymère c) représentant 90 à 10 % du poids total des composants a) à c) et le composant (B) (composition polymère) étant mis en oeuvre en quantité de 0,1 à 20 parties en poids, de préférence de 0,5 à 10 parties en poids, pour 100 parties en poids du composant (A).

2. Utilisation des mélanges de caoutchoucs Butyl halogénés et de compositions polymères selon la revendication 1 pour la fabrication de vulcanisats de caoutchouc.

3. Utilisation des mélanges de caoutchoucs Butyl halogénés et de compositions polymères selon la revendication 1 pour la fabrication de pneumatiques, en particulier de doublures internes de pneumatiques, de parois latérales de pneumatiques et de bandes de roulement de pneumatiques.
